# EUROPEAN PATENT APPLICATION

(11) **EP 2 763 284 A2**
(43) Date of publication of application: **06.08.2014**
(21) Application number: 14000269.2
(22) Date of filing: 27.01.2014
(51) Int. Cl.: H02K 1/27

(54) **Construction arrangement of a permanent magnet rotor for a generator**

(30) Priority: 31.01.2013 ES 201300102
(71) Applicant: Gamesa Innovation & Technology, S.L., 31621 Sarriguren (ES)
(72) Inventor: Sedano Perez, Ibon, 48170 Zamudio (ES); Rodriguez Rodriguez, Rafael, 39200 Reinosa (Cantabria) (ES)

(57) **Abstract**

Construction arrangement of a permanent magnet rotor in an electric machine that comprises a plurality of notches having permanent magnets inserted axially to form the poles of the electric machine. The magnetic magnets are arranged in the notches made in the geometry of the magnetic plate constituting the mechanical structure of the rotor. The axial notches divide the geometry of the rotor stacked plate into two areas separated by a narrow magnetic strip known as the bridge, through which the dispersion magnetic flux is regulated. The dispersion magnetic flux established thereby is reduced by at least 20% because of the recess on the mentioned bridge.

## Description

### FIELD OF THE INVENTION

The present invention refers to the arrangement of permanent magnets in the rotor of a generator. The cited generator is a multimegawatt generator used for obtaining electricity in the particular embodiment described in the present invention.

### BACKGROUND OF THE INVENTION

Permanent magnet generators are specifically designed to cover current needs. These are high performance generators with the characteristic of increasing the mean time between faults and thus highly effective for reducing the cost of maintenance of these machines.

The generators commonly employed for generating electricity are synchronous machines with protruding poles or cylindrical rotor. Nonetheless, the progressive entrance of permanent magnet generators has come about for diverse reasons, including less maintenance, better efficiency and greater reliability. Permanent magnet machines can be further distinguished as surface-configured permanent magnet generators, namely SPMSM (Surface Permanent Magnet Synchronous Machine) and internally-configured permanent magnet generators, namely IPMSM (Interior Permanent Magnet Synchronous Machine).

Surface-configured permanent magnet generators essentially comprise a rotor hub made of magnetic material onto which permanent magnets are affixed. If required, additional ringing can be made around the outer diameter of the rotor with synthetic or metal materials.

In interior magnet generators, the magnets are not located on the rotor surface but buried within axial housings positioned inside the rotor. This construction enables a more favorable electromechanical compromise.

The present invention focuses on permanent magnet generators of type IPMSM (Interior Permanent Magnet Synchronous Machine), whose magnets are housed within axial notches positioned inside the rotor.

When constructing IPMSM type generators, the mechanical structure constituting the rotor usually comprises laminated magnetic plates that are isolated from one another and stacked. Rotor structures made in this manner have a primary role of conveying magnetic flux in the rotor in addition to a mechanical role of supporting rotational efforts.

The geometry of the magnetic plate shaped as such has two areas, namely the outer area spanning from the outer diameter of the rotor to the notch housing the magnets and the other inner area for the rest of the magnetic plate. Both areas are joined together through a narrow strip called the bridge. A circulation of the dispersion magnetic flux occurs in this bridge area. This is a magnetic flux that does not contribute to the generation of torque and must be minimized to more efficiently harness the magnetic materials.

Current demand requires greater generator power capacities and thus larger dimensions. Rotor design dimensions exceed the values available on the market in terms of magnetic bandwidth, hence the need for a segmented construction in the rotor.

This case of segmented rotor construction would necessitate adapting the rotor shape with a view to sufficiently securing the magnets while minimizing dispersion magnetic flux.

For instance, patent CN101494397 describes a variable speed generator equipped with permanent magnets inside the notches on an iron rotor core.

In the above arrangement, there is no specific indications for reducing dispersion magnetic flux among permanent magnets.

### DESCRIPTION OF THE INVENTION

The present invention shows some axial notches made on the rotor to divide the segmented magnetic plate into two separate areas: the outer area of the rotor spanning from the outer diameter to the notch housing the magnets; and the inner area corresponding to the rest of the magnetic plate. With a view to considering the centrifugal forces created by the rotating rotor, both areas are joined by a narrow magnetic strip known as a bridge.

The presence of this bridge area is closely related to the dispersion magnetic flux between magnets. This patent defines the term dispersion magnetic flux as the part of the magnetic flux generated by the magnets that does not reach the stator and is therefore not useful in generating torque in the machine. The magnets are shaped so that one magnet conducts its magnetic flux toward the stator while the next magnet is positioned in the opposite direction so as to create the poles of the machine. The magnetic flux generated by the magnets has a less reluctant path across the bridges and tend to return through these bridges, constituting the dispersion magnetic flux. This dispersion magnetic flux, which could generally involve up to 30% of the total flux generated by the magnets, entails a reduction that should be offset through the use of a larger volume of magnets.

The object of the present invention is to modify the shape of the magnetic plate of the machine rotor in the interpolar area, specifically in the area defined above as the bridge. The purpose of this geometrical modification is to reduce the direct dispersion magnetic flux from magnet to magnet and, consequentially, the total magnetic flux. This thus contributes to reducing the volume of the magnets in the machine rotor through a more efficient use thereof.

### FIGURES

Figure 1 depicts a common embodiment of an IPMSM construction with buried magnets housed inside axial notches in the rotor.
Figure 2 depicts a detail of the state of the art in IPMSM construction known for the shape of a segmented magnetic plate and its interior magnets.
Figure 3 depicts a detail of the paths that the dispersion magnetic flux follows within the bridge area.
Figure 4 depicts a detailed embodiment of the bridge area in accordance with the present invention.
Figure 5 depicts a new detail of the paths that the dispersion magnetic flux follows when crossing the bridge area.

### DESCRIPTION OF THE PREFERENTIAL EMBODIMENTS

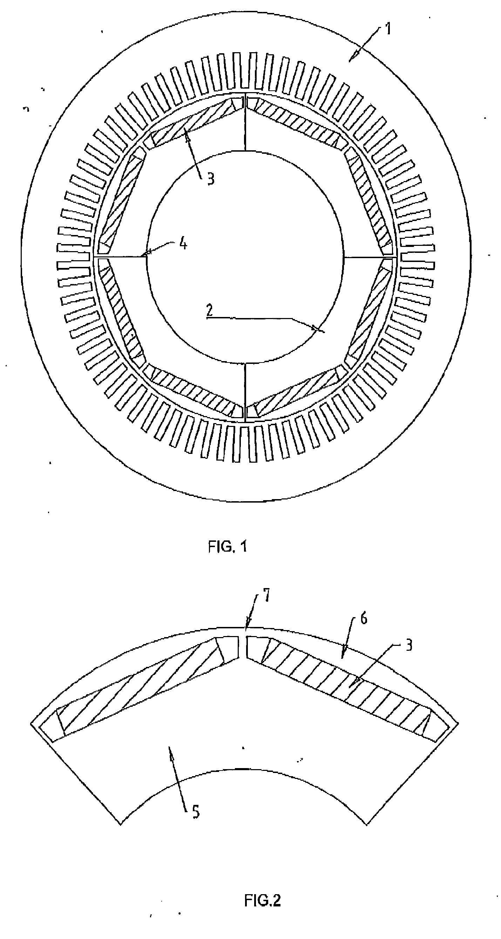

Figure 1 depicts a method of embodiment with an eight-pole electric machine according to a cross-section made to the machine. The constitution of the elements that compose this machine is a common construction inside a permanent magnet generator and, as such, is considered to fall within known state of the art. In this arrangement, the stator (1) comprises the outer ring and the grooves of the windings are shown thereon. The rotor (2) comprises the inner ring and is formed by a plurality of magnetic plates with some axial notches for housing the permanent magnets (3). The rotor unit (2) is formed in four magnetic plate assemblies with a line (4) marking the joint between magnetic plate assemblies.

As shown in figure 2, the axial notch made in the rotor (only partially illustrated) is appropriately sized to house the magnet (3), dividing the magnetic plate into two clearly separate parts: the outer area (6) near the outer diameter of the rotor and the inner area (5) corresponding to the rest of the magnetic plate. The area that joins the outer area (6) and the inner area (5) is a narrow part on the magnetic plate known as the bridge (7). The presence of this bridge area (7) is closely related to the dispersion magnetic flux between magnets (3).

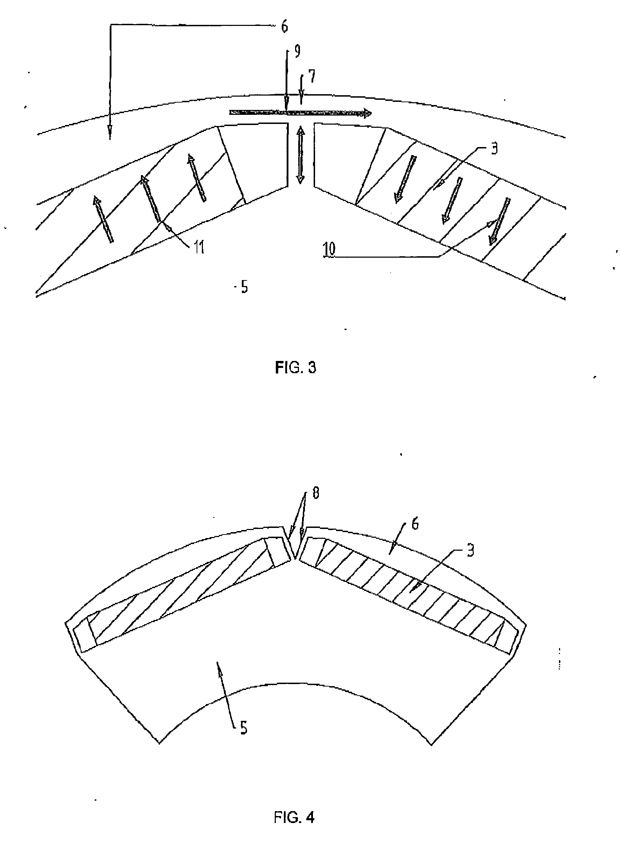

Figure 3 illustrates how the magnetic flux generated by the magnets (3) have a path of less reluctance across the bridges (7), tending to return through these bridges and constituting the dispersion magnetic flux (9). The magnets (3) are shaped so that one magnet conducts its magnetic flux toward the stator (11) while the next magnet is positioned in the opposite direction (10).

As shown in figure 4, the present invention depicts a shape in the region that joins the outer area (6) with the inner area (5) and comprises a recess (8). While the recess (8) in the bridge area (7) is represented in the preferential embodiment as beveled, other shapes performing the same function cannot be ruled out and different silhouettes can be made on the magnetic plate.

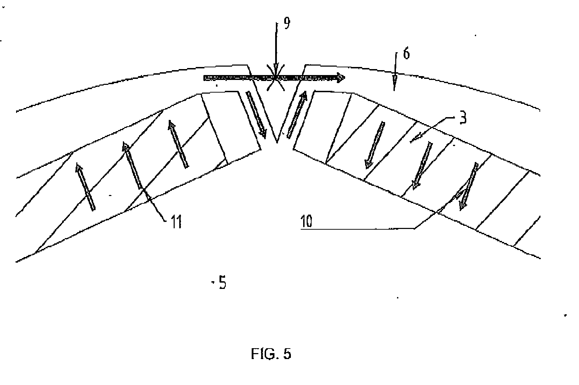

Figure 5 illustrates the elimination of the upper path of the dispersion magnetic flux generated by the magnets (3). Doing so reduces the dispersion magnetic flux (9) while maintaining magnetic flux toward the stator (11) and the flux flowing in the opposite direction (10). This decrease in dispersion flux (11) can be estimated as a reduction of 20%.

## Claims

1. Construction arrangement of a permanent magnet rotor for a multimegawatt generator with an interior configuration known as IPMSM (Interior Permanent Magnet Synchronous Machine), comprising a stacking of segmented magnetic plates onto which one or more notches are made into which permanent magnets are inserted, **characterized in that** the axial notch made in the rotor divides the magnetic plate into two clearly separate parts: the outer area (6) near the outer diameter of the rotor and the inner area (5) corresponding to the rest of the magnetic plate shaping a narrow zone on the magnetic plate known as the bridge (7) and through which flows a reduced dispersion flux because of the material recess on the narrow part of the bridge.

2. Construction arrangement of a permanent magnet rotor for a generator according to the first claim, **characterized in that** the recess occurs on the outer diameter (gap) of the segmented magnetic plate and **in that** it has a preferentially beveled shaped.

3. Construction arrangement of a permanent magnet rotor for a generator according to the first claim, **characterized in that** the mechanical structure of the rotor comprises stacked and segmented magnetic plates, and the length of the segments used is based on the bandwidth available on the market.

4. Construction arrangement of a permanent magnet rotor for a generator according to the first claim, in which the permanent magnets are sintered Neodymium-based magnets.

5. Construction arrangement of a permanent magnet rotor for a generator according to the first claim, in which the permanent magnets are cuboid and inserted axially into the housing made on the magnetic plate of the rotor.

6. Construction arrangement of a permanent magnet rotor for a generator according to the first claim, **characterized by** the reduction of the dispersion flux in estimated values of at least 20%.

7. Construction arrangement of a permanent magnet rotor for a generator according to the first claim, **characterized by** a depth of the recesses of similar dimensions at the height of the magnet.
